(19) Europäisches Patentamt
European Patent Office
Office européen des brevets

(11) **EP 2 737 810 A1**

(12) **EUROPEAN PATENT APPLICATION**

(43) Date of publication:
**04.06.2014  Bulletin 2014/23**

(51) Int Cl.:
*A23L 2/56* (2006.01)   *C12G 3/06* (2006.01)
*C12C 12/04* (2006.01)   *C12G 3/02* (2006.01)

(21) Application number: **13194828.3**

(22) Date of filing: **28.11.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.11.2012  JP 2012260273**

(71) Applicant: **Suntory Holdings Limited
Kita-ku, Osaka-shi
Osaka 530-8203 (JP)**

(72) Inventors:
• **Kudo, Mika
  Kawasaki-shi, Kanagawa 211-0067 (JP)**
• **Kitamura, Yurika
  Kawasaki-shi, Kanagawa 211-0067 (JP)**
• **Fujiwara, Yasuko
  Kawasaki-shi, Kanagawa 211-0067 (JP)**

(74) Representative: **Vossius & Partner
Siebertstrasse 4
81675 München (DE)**

(54) **Non-alcohol beverage**

(57)    The object of the present invention is to develop a technology capable of providing an alcohol-like savor to a non-alcohol beverage. The present invention provides a beverage containing a bitterness substance and having less than 1% alcohol by volume, in which the propanol concentration in the beverage is 6 to 2000 ppm.

EP 2 737 810 A1

**Description**

The present invention relates to a non-alcohol beverage provided with an alcohol-like savor, and a method for producing the same.

Recently, the so-called non-alcohol beverage, such as non-alcohol beer and non-alcohol cocktail, which imitates the flavor of alcohol, such as beer and cocktail, but contains almost no alcohol (ethanol) is gaining wide popularity. Among those so-called non-alcohol beverages, which have less than 1% alcohol by volume, products that have less than 0.01 % alcohol by volume and that are labeled "0.00% alcohol by volume" are receiving particular attention and growing into a new product category.

These non-alcohol beverages are similar to normal beverages (beverages that exclude alcoholic beverages), such as soft drinks, in that they contain no alcohol (ethanol), but strictly differ from normal beverages in that their quality is designed to approach alcohol beverages including beer and cocktail, which they imitate as their model, and in that such quality is expected by the consumers.

Now, alcoholic beverages have an "alcohol-like savor" that includes a light sweet flavor and a bit of pungent sensation originating from alcohol (ethanol). However, since non-alcohol beverages contain almost no alcohol (ethanol), the savor of the non-alcohol beverages (including those products labeled "0.00% alcohol by volume") may feel lacking in depth and width, compared to alcohol including beer and cocktail, which they imitate as their model. However, consumers expect to feel an "alcohol-like savor" that includes a light sweet flavor and a bit of pungent sensation even if no alcohol (ethanol) is contained, as from alcohol including beer and cocktail, which is the model.

In view of the above situation, the development of non-alcohol beverages that satisfy the taste of consumers expecting an alcohol-like savor even at an alcohol by volume of less than 1% is a problem that beverage manufactures need to solve.

Few technologies are disclosed to solve the above problem. Patent Document I discloses a non-alcohol beverage that has been provided with an alcohol-like sensation through the incorporation of an acidity-providing substance and a bitterness-providing substance, combined at a certain range, and a production method of the same. Tartaric acid, lactic acid, acetic acid, phosphoric acid, and fumaric acid are presented as specific acidity-providing substances to be added, and the range 100 to 5000 ppm is presented as a preferable range of concentration.

In addition, Patent Document 2 discloses a non-alcohol beverage provided with an alcohol-like sensation by the addition of aliphatic alcohol containing 4 to 5 carbons and an astringency-providing substance, combined at a certain range, and a production method of the same. An acidity-providing substance and a bitterness-providing substance are presented as the above mentioned astringency-providing substance, and more specifically, tartaric acid, lactic acid, acetic acid, phosphoric acid, and fumaric acid are presented as the acidity-providing substance; further, the document describes adding an acidity-providing substance to achieve a preferable range of concentration in the beverage, which is 20 to 800 mg/l against an aliphatic alcohol containing 4 or 5 carbons, having 1 to 100 mg/l concentration.

Patent Document 1: Japanese Patent Publication No. 2011-254731
Patent Document 2: Japanese Patent Publication No. 2012-060975

As shown above, developing non-alcohol beverages that satisfy the taste of consumers expecting an alcohol-like savor even at an alcohol content by volume of less than 1% is a high-priority issue of beverage manufacturers.

Patent Document 1 indicates that citric acid and malic acid, which are commonly used in beverages, did not sufficiently provide the effect of the invention, since they "had no alcohol-like sensation" even when they were combined with a bitterness-providing substance. Accordingly, acids other than citric acid and malic acid, which are commonly used in beverages to achieve a beverage's target quality (acidity), need to be added to provide an alcohol-like sensation. However, the quality of acidity differs by the acid type, so a use of multiple acids will cause variation in acidity that will undesirably affect the target designed quality.

The invention of Patent Document 2 requires an addition of an acidity-providing substance that is neither a citric acid nor a malic acid, since citric acids and malic acids do not provide astringency. However, similar to Patent Document 1 above, the use of multiple acids will cause variation of acidity that may lead to a difficulty in designing the quality of the beverage. Further. Patent Document 2 allows a combined use of the acidity-providing substance and the bitterness-providing substance, but a view to the balance of the three aspects consisting of alcohol-like sensation, acidity and bitterness, is necessary when designing the quality in beverage development. Designing the beverage becomes particularly difficult especially in cases where the raw material of the beverage includes something like fruit juice, which contains both an acidity-providing substance and a bitterness-providing substance.

In view of the above problems, the object of the present invention is to develop a technology that can provide an alcohol-like savor to non-alcohol beverages by a simple arrangement that has little impact on the designed quality.

The present inventors conducted intensive studies concerning the above problem and discovered that a pleasing "alcohol-like savor" that includes a light sweet flavor and a bit of pungent sensation can be obtained in a non-alcohol beverage containing a bitterness substance by adding propanol of a certain concentration, and thus, completed the present invention.

In other words, the present invention encompasses the following aspects without being limited thereby.

(1) A beverage containing a bitterness substance and having less than 1% alcohol by volume, wherein a propanol concentration in the beverage is 6 to 2000 ppm.

(2) The beverage according to (1), wherein the propanol is 1-propanol and/or 2-propanol.

(3) The beverage according to either (1) or (2), wherein the bitterness substance is naringin and/or quassin.

(4) The beverage according to (2), wherein a naringin concentration in the beverage is 0.05 to 30 ppm.

(5) The beverage according to (2), wherein a quassin concentration in the beverage is 0.05 to 3 ppm.

(6) The beverage according to any one of (1) to (5), wherein the amount of alcohol by volume is less than 0.01%.

(7) The beverage according to any one of (1) to (6) containing a high-intensity sweetener.

(8) The beverage according to any one of (1) to (7), wherein the high-intensity sweetener is one type or two or more types selected from a group consisting of sucralose, Acesulfame K, and aspartame.

(9) The beverage according to any one of (1) to (8) containing a carbonic acid gas.

(10) The beverage according to any one of (1) to (9), wherein a soluble solid concentration in the beverage is 0.1 to 5.0 degrees.

(11) A method for producing a beverage containing a bitterness substance and having less than 1% alcohol by volume, comprising adjusting a propanol concentration in the beverage to 6 to 2000 ppm.

(12) A method for improving a taste of a beverage containing a bitterness substance and having less than 1% alcohol by volume, comprising adjusting a propanol concentration in the beverage to 6 to 2000 ppm.

The present invention provides a non-alcohol beverage having a pleasing alcohol-like savor that includes a light sweet flavor and a bit of pungent sensation (may be referred to simply as "a pleasing alcohol-like savor" or "an alcohol-like savor" in the present specification) even at an alcohol content by volume of less than 1%, and a production method of the same.

The present invention relates to a so-called non-alcohol beverage, which has an alcohol content by volume of less than 1%, and to a preferable aspect of a beverage having less than 0.01% alcohol by volume, which is allowed the label of "0.00% alcohol by volume." In particular, considering that the present invention can provide an alcohol-like savor to a non-alcohol beverage, it is especially preferable to apply the present invention to a beverage having a low alcohol by volume of less than 0.5%, or further, an alcohol by volume of less than 0.01%, since such beverage can benefit greatly from the advantageous effect of the present invention.

In the present invention, the term "alcohol" in the non-alcohol beverage refers to ethanol having 2 carbons (ethyl alcohol, $C_2H_5OH$) out of the "alcohols (substances whose hydrogen group constituting the hydrocarbon is substituted by a hydroxyl group)," by the chemical definition of the term, and the term does not include other alcohols having different number of carbons, such as propanol (1-propanol or 2-propanol), unless otherwise stated. Further, the alcohol content by volume is the volume% of ethanol in the beverage.

Propanol

The beverage of the present invention contains 6 to 2000 ppm of propanol. A propanol is a type of aliphatic saturated alcohol having 3 carbons, and is also known as propyl alcohol. There are two constitutional isomers depending on which of the three carbons is substituted with the hydroxyl group; the propanol whose position-1 carbon is substituted is 1-propanol, and the propanol whose position-2 carbon is substituted is 2-propanol. The 1-propanol is a primary alcohol represented by the rational formula $CH_3CH_2CH_2OH$, having a unique aroma, and it is also known as n-propanol (normal propanol). The 2-propanol is a secondary alcohol represented by the rational formula $CH_3CH(OH)CH_3$, having a bit more pungent aroma compared to 1-propanol, and it is also known as i-propanol (isopropanol). Both types of propanols are allowed to be used as a food additive or a flavoring agent not just in Japan, but also in Europe, the United States, and many other countries; however, there is no example of its use for the purpose of providing an alcohol-like savor that includes a light sweet flavor and a bit of pungent sensation.

Either of the above 2 types of propanols can be used suitably in the present invention, or they can be used in combination. The propanol concentration in the beverage of the present invention is 6 to 2000 ppm, preferably 50 to 1500 ppm, and more preferably 100 to 1000 ppm.

The propanol concentration in the beverage can be quantified using a known method. Specifically, it can be analyzed using gas chromatography (GC) as exemplified by the following method.

GC Analysis Condition of Propanol

Equipment for use: GC: 6890N of Agilent Technologies Company

Column for use: SUPELCO 5% CARBOWAX 20M on 80/120 Carbopack B AW 8FT x 1/4IN x 2 mm ID GLASS Packed Column

Carrier Gas: Nitrogen gas

Flow: 18.8 mL/min

Inlet Temperature: 200°C

Column Temperature: increased from 70°C (maintained for 0 min.) at a temperature rise rate of 4°C/min, and maintained at 154°C for 10 minutes.

Introduced Amount: 1.0 $\mu$L

Detector: FID

Detection Temperature: 210°C

Bitterness Substance

The bitterness substance of the present invention is a substance added to a beverage to make the gustatory sense perceive bitterness. The bitterness substance of the present invention can provide an alcohol-like savor that includes a light sweet flavor and a bit of pungent sensation to the beverage incorporating it by synergy with propanol. Further, propanol may induce a medicine-like taste or a lingering after taste depending on its concentration, but the bitterness substance has an additional effect of cancelling and reducing these deficiencies.

To apply the bitterness substance of the present invention, a substance extracted from a natural product can be used, or a commercial food additive (bitterness agent) can be added. Specific examples include naringin, quassin, hop-derived material, and caffeine, and naringin and quassin can be preferably used. Naringin (Japanese pronunciation: na-rin-jin), which is also pronounced na-rin-gin, is a substance represented by a molecular formula $C_{27}H_{32}O_{14}$. It can be obtained by extracting the substance from the fruit skin, fruit juice or seed of Citrus paradisi MACF (Rutaceae), using ethanol or methanol at room temperature, or water, then separating the extract. Quassin (Japanese pronunciation: kwa-shin), which is also pronounced kü-ɔ- -shin, is a substance represented by a molecular formula $C_{22}H_{28}O_6$, and it is a major active material in the Jamaica quassia (Quassia excelsa SW.) extract. A Jamaica quassia extract is also referred to as a quassia extract or quassia, and it is obtained by extraction from the trunk and branch or bark of Jamaica quassia (Simaroubaceae), using water. These bitterness substances can be used alone or 2 or more types of bitterness substances can be combined for use.

The type and concentration of bitterness substance that can be added in the present invention is not particularly limited, and they can be adjusted according to the type and concentration of the accompanying propanol. The concentration of a bitterness substance can be, for example, 0.05 to 100 ppm, preferably 0.05 to 50 ppm, and more preferably 0.1 to 30 ppm. The present invention can provide the beverage with an alcohol-like flavor even if the bitterness substance is at a relatively low concentration through synergy with propanol, exhibiting an extremely advantageous feature of retaining the designed quality of the beverage without much damage.

In an aspect of the present invention using 1-propanol as the propanol, the amount of bitterness substance should preferably be set as shown below. For example, when naringin is used as the bitterness substance, it is preferable to have a 1-propanol concentration of 6 to 2000 ppm and a naringin concentration of 0.05 to 100 ppm in the beverage; a 1-propanol concentration of 100 to 500 ppm and a naringin concentration of 0.05 to 30 ppm in the beverage; or a 1-propanol concentration of 500 to 1000 ppm and a naringin concentration of 0.1 to 50 ppm in the beverage. Likewise, when quassin is used as the bitterness substance, it is preferable to have a 1-propanol concentration of 6 to 2000 ppm and a quassin concentration of 0.05 to 3 ppm in the beverage; a 1-propanol concentration of 100 to 500 ppm and a quassin concentration of 0.05 to 3 ppm in the beverage; or a 1-propanol concentration of 500 to 1000 ppm and a quassin concentration of 0.1 to 3 ppm in the beverage.

Also, in an aspect of the present invention using 2-propanol as the propanol, the amount of bitterness substance should preferably be set as shown below. For example, when naringin is used as the bitterness substance, it is preferable to have a 2-propanol concentration of 6 to 2000 ppm and a naringin concentration of 0.05 to 100 ppm in the beverage; a 2-propanol concentration of 100 to 500 ppm and a naringin concentration of 0.05 to 30 ppm in the beverage; or a 2-propanol concentration of 500 to 1000 ppm and a naringin concentration of 30 to 50 ppm in the beverage. Likewise, when quassin is used as the bitterness substance, it is preferable to have a 2-propanol concentration of 6 to 2000 ppm and a quassin concentration of 0.05 to 3 ppm in the beverage; a 2-propanol concentration of 100 to 500 ppm and a quassin concentration of 0.05 to 3 ppm in the beverage.

Note that when 1-propanol and 2-propanol are used in combination as the propanol, the concentrations of the propanol and the bitterness substance to be added should preferably follow those for 2-propanol above.

The bitterness substance concentration in the beverage can be quantified using a known method. For example, naringin and quassin can be analyzed by the following conditions using a high-performance liquid chromatography (HPLC).

HPLC Analysis Condition of Naringin

Equipment for use: 1290 Infinity LC System of Agilent Technologies Company
Column for use: Zorbax Eclipse Plus RRHD C18 1.8 $\mu$m 2.1 x 150 mm of Agilent Technologies Company

Mobile Phase:

A) 0.1% formic acid solution
B) acetonitrile

0.0 to 0.5 min (15% B) $\rightarrow$ 6.0 min (25%, B) $\rightarrow$ 6.05-7.0 min (100% B), Equilibration by the initial mobile phase: 3 min
Flow Rate: 0.6 mL/min
Column Temperature: 40°C
Introduced Amount: 2.0 $\mu$L
Detector: 4000 Q TRAP of AB Sciex Company (ESI negative, MRM mode, m/z 579.2$\rightarrow$271.1)

HPLC Analysis Condition of Quassin

Equipment for use: 1290 Infinity LC System of Agilent Technologies Company
Column for use: Mightysil RP-18GP (150 mm $\times$ 4.6 mm i.d.)

Mobile Phase:

acetonitrile/water = 35/65 (v/v)
Flow Rate: 1.0 mL/min
Column Temperature: 30°C
Introduced Amount: 5 $\mu$L
Detector: 4000 Q TRAP of AB Sciex Company (ESI negative, MRM mode, m/z 389.5$\rightarrow$222.9)

High-Intensity Sweetener

A high-intensity sweetener should preferably be added to the beverage of the present invention. The high-intensity sweetener of the present invention is a natural sweetener or a synthetic sweetener having a stronger sweetness than sucrose, and it is not particularly limited as long as it is a sweetener that can be added to food or beverages.
Such high-intensity sweeteners include peptide sweeteners, such as aspartame, alitame, neotame, glycyrrhizin, etc.; glycoside sweeteners, such as stevia sweeteners (including stevia extracts, and enzyme-treated stevia prepared by an enzyme treatment of stevia to add glucose, and Rebaudioside A, which is a sweetness component of stevia having the best sweetness quality), licorice extracts; sucrose derivatives, such as sucralose; synthetic sweeteners, such as Acesulfame potassium (also known as "Acesulfame K"), saccharin, neosperidin-dihydrochalcone. They can be used alone or in a combination of two or more types, as necessary. Preferably, a high-intensity sweetener is one type or two or more types selected from a group consisting of sucralose, Acesulfame K, and aspartame.
A high-intensity sweetener has an extremely strong sweetness compared to sucrose, but its problem is that it can exhibit a sweetness quality differing from sucrose or an undesirable taste. For example, sucralose and aspartame are noted as having a lingering sweet taste remaining as the after taste, and having a tendency to lack body. Acesulfame K is noted as having a bitter after taste and a tendency to lack body. However, the present invention can improve such undesirable after taste of high-intensity sweeteners. For example, the lingering sweet after taste of sucralose and aspartame and the bitter after taste of Acesulfame K can be mitigated by the effect of the present invention of cancelling out the medicine-like taste or lingering after taste.
The amount of a high-intensity sweetener to be added to the beverage of the present invention can be determined without particular limitation according to the target designed quality of the beverage, and specifically, it should preferably be 1 to 900 ppm, more preferably 5 to 700 ppm, and even more preferably 10 to 500 ppm. Note that these contents are the total amount of the high-intensity sweetener.

Further, when the high-intensity sweetener is sucralose, its concentration in the beverage should preferably be 1 to 400 ppm, more preferably 5 to 400 ppm, and even more preferably 10 to 300 ppm.

When the high-intensity sweetener is Acesulfame K, its concentration in the beverage should preferably be 1 to 500 ppm, more preferably 10 to 500 ppm, and even more preferably 50 to 400 ppm.

The concentration of a high-intensity sweetener added to the beverage of the present invention can be measured by a known method, such as the HPLC method. For example, sucralose and Acesulfame K can be analyzed and quantified according to the following conditions.

HPLC Analysis Condition of Sucralose

Equipment for use: 1290 Infinity LC System of Agilent Technologies Company

Column for use: Zorbax Eclipse Plus RRHD C18 1.8 $\mu$m 2.1 x 150 mm of Agilent Technologies Company

Mobile Phase:

    A) 5 mM ammonium acetate aqueous solution

    B) 5 mM ammonium acetate acetonitrile solution

0.0 min (60% B) → 15.0 min (95% B), Equilibration by the initial mobile phase: 7 min

Flow Rate: 0.2 mL/min

Column Temperature: 40°C

Introduced Amount: 1.0 $\mu$L

Detector: 4000 Q TRAP of AB Sciex Company (ESI negative, MRM mode, m/z 395.2→359.2)

HPLC Analysis Condition of Acesulfame K

Equipment for use: 1290 Infinity LC System of Agilent Technologies Company Column for use: Imtakt Cadenza CD-C18 4.6 x 150 mm

Mobile Phase:

acetonitrile/10 mM ammonium formate (13/87)

Flow Rate: 1.0 mL/min

Column Temperature: 37°C

Introduced Amount: 1.0 $\mu$L

Detector: Corona Ultra of Dionex Company

The alcohol content by volume (volume%) in the present invention can be measured by the method described in the National Tax Agency (NTA) Official Analysis Method (2007 NTA Instruction No. 6, amended on June 22, 2007). Specifically, alcohols with and without added low-level saccharides (tourui), such as sucrose, can each be measured by the following method.

Samples without added low-level saccharides (tourui), such as sucrose

An accurate amount (100 to 150 mL) of the sample is portioned out at 15°C using volumetric flasks. The portioned out sample is transferred into conical flasks holding 300 to 500 mL, the volumetric flasks are each washed twice with 15 mL of water, and the water for washing is also transferred into the conical flasks. The volumetric flasks used for portioning out the sample are used as receivers in a direct-fire distillation, then, after 70% or more of the portioned-out amount of the sample evaporates, water is added to the residue to return the residue to the portioned-out amount at 15°C, and the resulting solution is shook well to be used as the analysis sample.

Samples with added low-level saccharides (tourui), such as sucrose

The analysis sample is prepared by the vapor distillation method. That is, an accurate amount (100 to 150 mL) of the sample is portioned out at 15°C using volumetric flasks. The portioned out sample is transferred to a pair of flasks holding 500 mL, the volumetric flasks are each washed twice with 15 mL of water, and the water for washing is also transferred into the flasks. The volumetric flasks used for portioning out the sample are used as receivers in a vapor distillation, then, after 98% or more of the portioned-out amount of the sample evaporates, water is added to the residue to return the residue to the portioned-out amount at 15°C, and the resulting solution is shook well to be used as the analysis sample.

The density of the analysis sample, prepared as shown above, at 15°C is measured using a mechanical oscillator densitometer, and calculated using "Table 2 Conversion Table of Alcohol, Density (15°C) and Relative Density (15/15°C)" which is an annex of the above NTA Official Analysis Method to obtain the alcohol content by volume. The mechanical oscillator densitometer DA-310 of Kyoto Electronics Manufacturing Co., Ltd. can be used as the mechanical oscillator densitometer.

The beverage of the present invention can have sugar and different additives added to it. Different additives that can be added include flavoring agents, vitamins, dyes, antioxidants, emulsifiers, preservatives, seasonings, extracts, pH adjustors, and quality stabilizers.

The present invention exhibits a good effect in aspects of a beverage with a low soluble solid (solute) concentration in the beverage or a carbonated drink. This feature enables the production of non-alcohol beverages of the chu-hi type and the calorie-off type with high quality.

Such beverages with a soluble solid concentration of 5 degrees or lower are called "low-solute beverages" in the present specification, and low-solute beverages are one of the more preferable aspects of the present invention, since they contain little low-level saccharides (tourui) and fruit juice, and let the effect of the present invention, which is to provide a pleasing alcohol-like savor that includes a light sweet flavor and a bit of pungent sensation, stand out.

The soluble solid concentration of the low-solute beverage of the present invention is defined by the soluble solid concentration (SS: Soluble Solid) calculated from the Brix value obtained by a saccharimeter, refractometer or the like. The Brix value is the refractive index measured at 20°C, converted to the mass/mass% of the sucrose solution based on the conversion table of ICUMSA (International Commission for Uniform Methods of Sugar Analysis), and it represents the soluble solid concentration in the solution. The unit is shown by "°Bx," "%," or "degree."

The Brix value per se can be used as the soluble solid concentration in a non-alcohol beverage that does not contain any alcohol, or that has only a minute amount of alcohol, represented by an alcohol content by volume of less than 0.01%. If there is more alcohol, that is, when the alcohol by volume is 0.01% or higher and less than 0.5%, the alcohol affects the refractive index, so the soluble solid concentration is calculated from the Brix value using the following formula.

$$\text{- The soluble solid concentration (SS) in the beverage} = MV\text{-}CV$$

(in which, MV (Measured Value) is the actual measured Brix value of the beverage and CV (Calculated Value) is the Brix value in an alcohol aqueous solution having the same alcohol by volume as the actual measured value of the alcohol by volume of the beverage.)

When CV is obtained using an alcohol aqueous solution consisting of a neutral spirit diluted by pure water, the soluble solid concentration (SS) of the beverage can be shown as below, since a relation of "CV=0.39×actual measured value of alcohol by volume of beverage" exists.

$$\text{- soluble solid concentration (SS) of beverage} = MV\text{-}0.39\times\text{actual measured value of}$$
$$\text{alcohol by volume of beverage}$$

The low-solute beverage in the present specification is a beverage with a SS of 5 degrees or lower. A SS of 0.1 to 5 degrees is preferable, since the effect of the present invention can be strongly perceived, and a SS of 0.1 to 3 degrees is more preferable, since the effect can be more strongly perceived.

A low-solute beverage encompasses an aspect of a calorie-off type beverage, labeled as "Zero Low-Level Saccharide (Tourui)," "Zero Available Carbohydrate (Toushitsu)," "Calorie Off," etc. Note that the labels of Zero Low-Level Saccharide (Tourui)," "Zero Available Carbohydrate (Toushitsu)," and "Calorie Off" are defined in the Nutrition Labeling Standard based on the provision of the Health Promotion Act of Japan. For example, the label "Zero Low-Level Saccharide (Tourui)" is attached to a beverage having a low-level saccharide (tourui) (monosaccharide or disaccharide, which is not sugar alcohol) content of less than 0.5 g to a beverage of 100 g. In this regard, Toushitsu refers to carbohydrates excluding dietary fibers.

The beverage of the present invention can be a carbonated drink containing carbonic acid gas. A carbonated drink is one of the more preferable aspects of the present invention, since an application of the present invention to the carbonated drink induces a combination of an alcohol-like aroma and a foaming sensation of the carbonic acid gas to provide a refreshing sensation like chu-hi.

Carbonic acid gas can be provided into the beverage using methods commonly known to a person skilled in the art including, without being limited thereby, dissolving carbon dioxide in the beverage under pressure, mixing carbon dioxide and the beverage in a piping using a mixer, such as the carbonator of Tuchenhagen Company, or spraying the beverage in a tank filled with carbon dioxide to let the beverage absorb carbon dioxide, or mixing the beverage and carbonated water. These means are used as necessary to adjust the carbonic acid gas pressure.

The carbonated drink of the present invention has a carbonic acid gas pressure of preferably 1.0 to 3.5 kg/cm$^2$, more preferably 1.2 to 2.5 kg/cm$^2$. The carbonic acid gas pressure can be measured using the Gas Volume Measurement Device GVA-500A of Kyoto Electronics Manufacturing Co., Ltd. For example, the sample temperature is set to 20°C, and the carbonic acid gas pressure is measured after degassing (snifting) of the air in the container of the Gas Volume Measurement Device, and shaking.

The beverage of the present invention can be a container-packaged beverage. The container of the container-packaged beverage is not particularly limited, and any container commonly used for beverage composition can be used, including packages made of resin, such as PET bottles, paper packages, such as cartons, glass containers, such as glass bottles, containers made of metal, such as aluminum cans and steel cans, and aluminum pouches.

Production Method of Beverages

From another perspective, the present invention relates to a production method of beverages. The method is characterized by the adding of 6 to 2000 ppm of propanol and bitterness substance to a beverage having less than 1% alcohol by volume. The embodiment and method of adding propanol and a bitterness substance are not particularly limited, and the propanol and bitterness substance may be added on their own, or in an article containing both substances, to be used as a raw material at a given timing in the production process.

The method of adding the material is not limited in the production of the beverage of the present invention. For example, the material can be added to the beverage using a known method. Steps, such as a sterilizing step or a packaging step, can be implemented as necessary. In a preferable aspect, the beverage of the present invention can be formed into a container-packaged beverage via a filling step to fill the beverage, and it can be made into a sterilized, container-packaged beverage. A sterilized, container-packaged beverage can be produced by, for example, a method of performing heat sterilization, such as retort sterilization, after filling the beverage composition into the container, or a method of sterilizing the beverage composition before filling it into a container.

More specifically, the beverage can be formed into a metal-container-packaged beverage, such as a canned beverage, by filling the beverage composition of the present invention in a package at a predetermined amount, and sterilizing the beverage (e.g. 65°C, 10 min), or it can be formed into a beverage in a PET bottle or a carton, a bottle, a can, or a pouch, by FP sterilization or UHT sterilization, maintaining the temperature at 90°C to 130°C for I to 60 seconds, and filling the beverage at a predetermined amount. When producing a container-packaged beverage from the beverage composition of the present invention, either a hot pack filling method or an aseptic filling method can be used.

Taste-Improving Method of Beverage

From yet another perspective, the present invention relates to a method for improving the taste of a beverage having less than 1% alcohol by volume. The method is characterized by the adjustment of the propanol concentration in a beverage to 6 to 2000 ppm and an incorporation of a bitterness substance in a beverage, when the beverage has less than 1% alcohol by volume.

In the method of the present invention, a pleasing alcohol-like savor that includes a light sweet flavor and a bit of pungent sensation can be enhanced, while regulating the impact on the designed quality to a minimum, in a beverage having less than 1% alcohol by volume.

The content of the present invention is described below in detail by reference to the Examples of the present invention, without being limited to those Examples. Further, the numerical range in the present specification includes the end values, unless otherwise stated, and ppm used to indicate the concentration of components, such as propanol and the bitterness substance, is the rate of the weight of the substance (mg) to the volume of the beverage (L) shown as parts per million (ppm).

Test Example 1: Impact of 1-propanol on a non-alcohol beverage containing a bitterness substance

A study was conducted on the impact of adding 1-propanol to a non-alcohol beverage containing naringin as a bitterness substance. Specifically, 1-propanol was added to an ion-exchange water containing 0.05 to 100 ppm of naringin to prepare a model solution of a non-alcohol beverage so that its 1-propanol concentration is 3 to 5000 ppm.

Five well-trained expert panelists performed a sensory evaluation concerning the resulting non-alcohol beverage to study the effect of adding 1-propanol and a bitterness substance. Evaluation was performed by the following perspectives: (1) a pleasing alcohol-like savor that includes a light sweet flavor and a bit of pungent sensation (hereinafter abbreviated to "an alcohol-like savor"); (2) medicine-like taste; (3) lingering after taste; (4) comprehensive evaluation (a pleasing sensation of an alcohol-like savor, such as depth and width), and using the following standard. The result of the evaluation was obtained by rounding off the average of the scores of the five expert panelists to a natural number. To evaluate the lingering after taste, the lingering after taste of the bitterness substance was evaluated in addition to the lingering after taste of propanol. The result of the sensory evaluation is shown in the tables below, in which Table 2 is a diagram of the result of the comprehensive evaluation of Table 1, and the color white represents a plot of 0 point, the color grey, a plot of 1 point, and the color black, a plot of 2 points.

(1) Providing an alcohol-like savor: the alcohol-like savor is strongly identifiable = 2 points, identifiable = 1 point, not identifiable = 0 point.
(2) Reduction in the medicine-like taste: the medicine-like taste is not identifiable = 2 points, moderately identifiable = 1 point, identifiable = 0 point.
(3) Reduction in the lingering after taste: the lingering after taste is not identifiable = 2 points, moderately identifiable = 1 point, identifiable = 0 point.
(4) Comprehensive Evaluation: a pleasing alcohol-like savor is strongly identifiable = 2 points, identifiable = 1 point, not identifiable = 0 point.

As evident from the evaluation result, an incorporation of 6 to 2000 ppm of 1-propanol in the non-alcohol beverage based on the present invention resulted in a reduction of a medicine-like taste and a lingering after taste, while providing an alcohol-like savor.

As shown in Tables 1, 2, the result was particularly preferable with a great reduction in deficiencies, such as the medicine-like taste and the lingering after taste, while the alcohol-like savor remained evident, when the 1-propanol concentration in the beverage was 6 to 2000 ppm and the naringin concentration was 0.05 to 100 ppm. Further, the combination of a 1-propanol concentration in the beverage of 100 to 500 ppm and a naringin concentration of 0.05 to 30 ppm, or a 1-propanol concentration in the beverage of 500 to 1000 ppm and a naringin concentration of 0.1 to 50 ppm exhibited a more preferable result, showing the above tendency more strongly.

Table 1-1

Table 1-1. Impact of 1-propanol on a non-alcohol beverage containing 0.05 ppm naringin

| 1-propanol (ppm) | providing alcohol-like savor | reducing medicine-like taste | reducing lingering after taste | comprehensive evaluation |
|---|---|---|---|---|
| 3 | 0 | 2 | 2 | 0 |
| 6 | 1 | 2 | 2 | 1 |
| 100 | 2 | 2 | 2 | 2 |
| 500 | 2 | 2 | 2 | 2 |
| 1000 | 2 | 2 | 1 | 1 |
| 2000 | 2 | 2 | 1 | 1 |
| 5000 | 2 | 1 | 0 | 0 |

Table 1-2

Table 1-2. Impact of 1-propanol on a non-alcohol beverage containing 0.1 ppm naringin

| 1-propanol (ppm) | providing alcohol-like savor | reducing medicine-like taste | reducing lingering after taste | comprehensive evaluation |
|---|---|---|---|---|
| 3 | 0 | 2 | 2 | 0 |
| 6 | 1 | 2 | 2 | 1 |
| 100 | 2 | 2 | 2 | 2 |

(continued)

| 1-propanol (ppm) | providing alcohol-like savor | reducing medicine-like taste | reducing lingering after taste | comprehensive evaluation |
|---|---|---|---|---|
| 500 | 2 | 2 | 2 | 2 |
| 1000 | 2 | 2 | 2 | 2 |
| 2000 | 2 | 2 | 1 | 1 |
| 5000 | 2 | 1 | 0 | 0 |

Table 1-3

Table 1-3. Impact of 1-propanol on a non-alcohol beverage containing 0.5 ppm naringin

| 1-propanol (ppm) | providing alcohol-like savor | reducing medicine-like taste | reducing lingering after taste | comprehensive evaluation |
|---|---|---|---|---|
| 3 | 0 | 2 | 2 | 0 |
| 6 | 1 | 2 | 2 | 1 |
| 100 | 2 | 2 | 2 | 2 |
| 500 | 2 | 2 | 2 | 2 |
| 1000 | 2 | 2 | 2 | 2 |
| 2000 | 2 | 2 | 1 | 1 |
| 5000 | 2 | 1 | 0 | 0 |

Table 1-4

Table 1-4. Impact of 1-propanol on a non-alcohol beverage containing 1 ppm naringin

| 1-propanol (ppm) | providing alcohol-like savor | reducing medicine-like taste | reducing lingering after taste | comprehensive evaluation |
|---|---|---|---|---|
| 3 | 0 | 2 | 2 | 0 |
| 6 | 1 | 2 | 2 | 1 |
| 100 | 2 | 2 | 2 | 2 |
| 500 | 2 | 2 | 2 | 2 |
| 1000 | 2 | 2 | 2 | 2 |
| 2000 | 2 | 2 | 1 | 1 |
| 5000 | 2 | 1 | 0 | 0 |

Table 1-5

Table 1-5. Impact of 1-propanol on a non-alcohol beverage containing 3 ppm naringin

| 1-propanol (ppm) | providing alcohol-like savor | reducing medicine-like taste | reducing lingering after taste | comprehensive evaluation |
|---|---|---|---|---|
| 3 | 0 | 2 | 2 | 0 |
| 6 | 1 | 2 | 2 | 1 |
| 100 | 2 | 2 | 2 | 2 |
| 500 | 2 | 2 | 2 | 2 |
| 1000 | 2 | 2 | 2 | 2 |

(continued)

| 1-propanol (ppm) | providing alcohol-like savor | reducing medicine-like taste | reducing lingering after taste | comprehensive evaluation |
|---|---|---|---|---|
| 2000 | 2 | 2 | 1 | 1 |
| 5000 | 2 | 1 | 0 | 0 |

Table 1-6

Table 1-6 Impact of 1-propanol on a non-alcohol beverage containing 5 ppm naringin

| 1-propanol (ppm) | providing alcohol-like savor | reducing medicine-like taste | reducing lingering after taste | comprehensive evaluation |
|---|---|---|---|---|
| 3 | 0 | 2 | 2 | 0 |
| 6 | 1 | 2 | 2 | 1 |
| 100 | 2 | 2 | 2 | 2 |
| 500 | 2 | 2 | 2 | 2 |
| 1000 | 2 | 2 | 2 | 2 |
| 2000 | 2 | 2 | 1 | 1 |
| 5000 | 2 | 1 | 0 | 0 |

Table 1-7

Table 1-7. Impact of 1-propanol on a non-alcohol beverage containing 6 ppm naringin

| 1-propanol (ppm) | providing alcohol-like savor | reducing medicine-like taste | reducing lingering after taste | comprehensive evaluation |
|---|---|---|---|---|
| 3 | 0 | 2 | 2 | 0 |
| 6 | 1 | 2 | 2 | 1 |
| 100 | 2 | 2 | 2 | 2 |
| 500 | 2 | 2 | 2 | 2 |
| 1000 | 2 | 2 | 2 | 2 |
| 2000 | 2 | 2 | 1 | 1 |
| 5000 | 2 | 1 | 0 | 0 |

Table 1-8

Table 1-8. Impact of 1-propanol on a non-alcohol beverage containing 10 ppm naringin

| 1-propanol (ppm) | providing alcohol-like savor | reducing medicine-like taste | reducing lingering after taste | comprehensive evaluation |
|---|---|---|---|---|
| 3 | 0 | 2 | 2 | 0 |
| 6 | 1 | 2 | 2 | 1 |
| 100 | 2 | 2 | 2 | 2 |
| 500 | 2 | 2 | 2 | 2 |
| 1000 | 2 | 2 | 2 | 2 |
| 2000 | 2 | 2 | 1 | 1 |
| 5000 | 2 | 1 | 0 | 0 |

Table 1-9

Table 1-9. Impact of 1-propanol on a non-alcohol beverage containing 20 ppm naringin

| 1-propanol (ppm) | providing alcohol-like savor | reducing medicine-like taste | reducing lingering after taste | comprehensive evaluation |
|---|---|---|---|---|
| 3 | 0 | 2 | 2 | 0 |
| 6 | 1 | 2 | 2 | 1 |
| 100 | 2 | 2 | 2 | 2 |
| 500 | 2 | 2 | 2 | 2 |
| 1000 | 2 | 2 | 2 | 2 |
| 2000 | 2 | 2 | 1 | 1 |
| 5000 | 2 | 1 | 0 | 0 |

Table 1-10

Table 1-10. Impact of 1-propanol on a non-alcohol beverage containing 30 ppm naringin

| 1-propanol (ppm) | providing alcohol-like savor | reducing medicine-like taste | reducing lingering after taste | comprehensive evaluation |
|---|---|---|---|---|
| 3 | 0 | 2 | 2 | 0 |
| 6 | 1 | 2 | 2 | 1 |
| 100 | 2 | 2 | 2 | 2 |
| 500 | 2 | 2 | 2 | 2 |
| 1000 | 2 | 2 | 2 | 2 |
| 2000 | 2 | 2 | 1 | 1 |
| 5000 | 2 | 1 | 0 | 0 |

Table 1-11

Table 1-11. Impact of 1-propanol on a non-alcohol beverage containing 40 ppm naringin

| 1-propanol (ppm) | providing alcohol-like savor | reducing medicine-like taste | reducing lingering after taste | comprehensive evaluation |
|---|---|---|---|---|
| 3 | 0 | 2 | 1 | 0 |
| 6 | 1 | 2 | 1 | 1 |
| 100 | 2 | 2 | 1 | 1 |
| 500 | 2 | 2 | 2 | 2 |
| 1000 | 2 | 2 | 2 | 2 |
| 2000 | 2 | 2 | 1 | 1 |
| 5000 | 2 | 1 | 0 | 0 |

Table 1-12

Table 1-12. Impact of 1-propanol on a non-alcohol beverage containing 50 ppm naringin

| 1-propanol (ppm) | providing alcohol-like savor | reducing medicine-like taste | reducing lingering after taste | comprehensive evaluation |
|---|---|---|---|---|
| 3 | 0 | 2 | 1 | 0 |

(continued)

| 1-propanol (ppm) | providing alcohol-like savor | reducing medicine-like taste | reducing lingering after taste | comprehensive evaluation |
|---|---|---|---|---|
| 6 | 1 | 2 | 1 | 1 |
| 100 | 2 | 2 | 1 | 1 |
| 500 | 2 | 2 | 2 | 2 |
| 1000 | 2 | 2 | 2 | 2 |
| 2000 | 2 | 2 | 1 | 1 |
| 5000 | 2 | 1 | 0 | 0 |

Table 1-13

Table 1-13. Impact of 1-propanol on a non-alcohol beverage containing 100 ppm naringin

| 1-propanol (ppm) | providing alcohol-like savor | reducing medicine-like taste | reducing lingering after taste | comprehensive evaluation |
|---|---|---|---|---|
| 3 | 0 | 2 | 1 | 0 |
| 6 | 1 | 2 | 1 | 1 |
| 100 | 2 | 2 | 1 | 1 |
| 500 | 2 | 2 | 1 | 1 |
| 1000 | 2 | 2 | 1 | 1 |
| 2000 | 2 | 2 | 1 | 1 |
| 5000 | 2 | 1 | 0 | 0 |

Table 2

Table 2. Result of comprehensive evaluation in the naringin-containing beverage of Test Example 1 (diagram)

| 1-propanol concentration (ppm) | 0.05 | 0.1 | 0.5 | 1 | 3 | 5 | 6 | 10 | 20 | 30 | 40 | 50 | 100 |
|---|---|---|---|---|---|---|---|---|---|---|---|---|---|
| 3 | | | | | | | | | | | | | |
| 6 | | | | | | | | | | | | | |
| 100 | | | | | | | | | | | | | |
| 500 | | | | | | | | | | | | | |
| 1000 | | | | | | | | | | | | | |
| 2000 | | | | | | | | | | | | | |
| 5000 | | | | | | | | | | | | | |

Test Example 2: Impact of 1-propanol on a non-alcohol beverage containing a bitterness substance

A study was conducted on the impact of adding 1-propanol to a non-alcohol beverage containing quassin as a bitterness substance. Specifically, 1-propanol was added to an ion-exchange water containing 0.05 to 3 ppm of quassin to prepare a model solution of a non-alcohol beverage with a 1-propanol concentration of 3 to 5000 ppm. The non-alcohol beverage was evaluated similarly to Test Example 1, and the result is shown in the tables below.

As evident from the evaluation result, an incorporation of 6 to 2000 ppm of 1-propanol in the non-alcohol beverage based on the present invention enabled the reduction of a medicine-like taste and a lingering after taste, while providing an alcohol-like savor.

As shown in Tables 3, 4, the result when quassin is added as the bitterness substance was particularly preferable with a great reduction in deficiencies, such as the medicine-like taste and the lingering after taste, while the alcohol-like savor remained evident, when the 1-propanol concentration in the beverage was 6 to 2000 ppm and the quassin concentration was 0.05 to 3 ppm. Further, the combination of a 1-propanol concentration in the beverage of 100 to 500 ppm and a quassin concentration of 0.05 to 3 ppm, or a 1-propanol concentration in the beverage of 500 to 1000 ppm and a quassin concentration of 0.1 to 3 ppm exhibited a more preferable result, showing the above tendency more strongly.
Table 3-1

Table 3-1. Impact of 1-propanol on a non-alcohol beverage <u>containing</u> 0 05 ppm quassin

| 1-propanol (ppm) | providing alcohol-like savor | reducing medicine-like taste | reducing lingering after taste | comprehensive evaluation |
|---|---|---|---|---|
| 3 | 0 | 2 | 2 | 0 |
| 6 | 1 | 2 | 2 | 1 |
| 100 | 2 | 2 | 2 | 2 |
| 500 | 2 | 2 | 2 | 2 |
| 1000 | 2 | 2 | 1 | 1 |
| 2000 | 2 | 2 | 1 | 1 |
| 5000 | 2 | 1 | 0 | 0 |

Table 3-2

Table 3-2. Impact of 1-propanol on a non-alcohol beverage containing 0 1 ppm quassin

| 1-propanol (ppm) | providing alcohol-like savor | reducing medicine-like taste | reducing lingering after taste | comprehensive evaluation |
|---|---|---|---|---|
| 3 | 0 | 2 | 2 | 0 |
| 6 | 1 | 2 | 2 | 1 |
| 100 | 2 | 2 | 2 | 2 |
| 500 | 2 | 2 | 2 | 2 |
| 1000 | 2 | 2 | 2 | 2 |
| 2000 | 2 | 2 | 1 | 1 |
| 5000 | 2 | 1 | 0 | 0 |

Table 3-3

Table 3-3. Impact of 1-propanol on a non-alcohol beverage containing 0.5 ppm quassin

| 1-propanol (ppm) | providing alcohol-like savor | reducing medicine-like taste | reducing lingering after taste | comprehensive evaluation |
|---|---|---|---|---|
| 3 | 0 | 2 | 2 | 0 |
| 6 | 1 | 2 | 2 | 1 |
| 100 | 2 | 2 | 2 | 2 |
| 500 | 2 | 2 | 2 | 2 |
| 1000 | 2 | 2 | 2 | 2 |
| 2000 | 2 | 2 | 1 | 1 |
| 5000 | 2 | 1 | 0 | 0 |

Table 3-4

Table 3-4 Impact of 1-propanol on a non-alcohol beverage <u>containing</u> 1 ppm quassin

| 1-propanol (ppm) | providing alcohol-like savor | reducing medicine-like taste | reducing lingering after taste | comprehensive evaluation |
|---|---|---|---|---|
| 3 | 0 | 2 | 1 | 0 |
| 6 | 1 | 2 | 1 | 1 |
| 100 | 2 | 2 | 2 | 2 |
| 500 | 2 | 2 | 2 | 2 |
| 1000 | 2 | 2 | 2 | 2 |
| 2000 | 2 | 2 | 1 | 1 |
| 5000 | 2 | 1 | 0 | 0 |

Table 3-5

Table 3-5 Impact of 1-propanol on a non-alcohol beverage containing 3 ppm quassin

| 1-propanol (ppm) | providing alcohol-like savor | reducing medicine-like taste | reducing lingering after taste | comprehensive evaluation |
|---|---|---|---|---|
| 3 | 0 | 2 | 0 | 0 |
| 6 | 1 | 2 | 1 | 1 |
| 100 | 2 | 2 | 2 | 2 |
| 500 | 2 | 2 | 2 | 2 |
| 1000 | 2 | 2 | 2 | 2 |
| 2000 | 2 | 2 | 1 | 1 |
| 5000 | 2 | 1 | 0 | 0 |

Table 4

Table 4. Result of comprehensive evaluation in the quassin-containing beverage of Test Example 1

| 1-propanol concentration (ppm) | 0.05 | 0.1 | 0.5 | 1 | 3 |
|---|---|---|---|---|---|
| 3 | | | | | |
| 6 | | | | | |
| 100 | | | | | |
| 500 | | | | | |
| 1000 | | | | | |
| 2000 | | | | | |
| 5000 | | | | | |

Test Example 3: Impact of 2-propanol on a non-alcohol beverage containing a bitterness substance

A study was conducted on the impact of adding 2-propanol to a non-alcohol beverage containing naringin as a bitterness substance. The non-alcohol beverage was prepared similarly to Test Example 1, except for using 2-propanol instead of 1-propanol, to perform the evaluation. The result is shown in the tables below

As evident from the tables, an incorporation of 6 to 2000 ppm of 2-propanol in the non-alcohol beverage based on the present invention enabled the reduction of a medicine-like taste and a lingering after taste, while providing an alcohol-like savor.

As shown in Tables 5, 6, the result when naringin is added as the bitterness substance was particularly preferable with a great reduction in deficiencies, such as the medicine-like taste and the lingering after taste, while the alcohol-like savor remained evident, when the 2-propanol concentration in the beverage was 6 to 2000 ppm and the naringin concentration was 0.05 to 100 ppm. Further, the combination of a 2-propanol concentration in the beverage of 100 to 500 ppm and a naringin concentration of 0.05 to 30 ppm, or a 2-propanol concentration in the beverage of 500 to 1000 ppm and a naringin concentration of 30 to 50 ppm exhibited a more preferable result, showing the above tendency more strongly.

Table 5-1

Table 5-1. Impact of 2-propanol on a non-alcohol beverage containing 0.05 ppm naringin

| 2-propanol (ppm) | providing alcohol-like savor | reducing medicine-like taste | reducing lingering after taste | comprehensive evaluation |
|---|---|---|---|---|
| 3 | 0 | 2 | 2 | 0 |
| 6 | 1 | 2 | 2 | 1 |
| 100 | 2 | 2 | 2 | 2 |
| 500 | 2 | 2 | 2 | 2 |
| 1000 | 2 | 1 | 1 | 1 |
| 2000 | 2 | 1 | 1 | 1 |
| 5000 | 2 | 0 | 0 | 0 |

Table 5-2

Table 5-2. Impact of 2-propanol on a non-alcohol beverage containing 0.1 ppm naringin

| 2-propanol (ppm) | providing alcohol-like savor | reducing medicine-like taste | reducing lingering after taste | comprehensive evaluation |
|---|---|---|---|---|
| 3 | 0 | 2 | 2 | 0 |
| 6 | 1 | 2 | 2 | 1 |
| 100 | 2 | 2 | 2 | 2 |
| 500 | 2 | 2 | 2 | 2 |
| 1000 | 2 | 1 | 1 | 1 |
| 2000 | 2 | 1 | 1 | 1 |
| 5000 | 2 | 0 | 0 | 0 |

Table 5-3

Table 5-3. Impact of 2-propanol on a non-alcohol beverage containing 0.5 ppm naringin

| 2-propanol (ppm) | providing alcohol-like savor | reducing medicine-like taste | reducing lingering after taste | comprehensive evaluation |
|---|---|---|---|---|
| 3 | 0 | 2 | 2 | 0 |
| 6 | 1 | 2 | 2 | 1 |
| 100 | 2 | 2 | 2 | 2 |
| 500 | 2 | 2 | 2 | 2 |
| 1000 | 2 | 1 | 2 | 1 |
| 2000 | 2 | 1 | 1 | 1 |
| 5000 | 2 | 0 | 0 | 0 |

Table 5-4

Table 5-4. Impact of 2-propanol on a non-alcohol beverage containing 1 ppm naringin

| 2-propanol (ppm) | providing alcohol-like savor | reducing medicine-like taste | reducing lingering after taste | comprehensive evaluation |
|---|---|---|---|---|
| 3 | 0 | 2 | 2 | 0 |
| 6 | 1 | 2 | 2 | 1 |
| 100 | 2 | 2 | 2 | 2 |
| 500 | 2 | 2 | 2 | 2 |
| 1000 | 2 | 1 | 2 | 1 |
| 2000 | 2 | 1 | 1 | 1 |
| 5000 | 2 | 0 | 0 | 0 |

Table 5-5

Table 5-5. Impact of 2-propanol on a non-alcohol beverage containing 3 ppm naringin

| 2-propanol (ppm) | providing alcohol-like savor | reducing medicine-like taste | reducing lingering after taste | comprehensive evaluation |
|---|---|---|---|---|
| 3 | 0 | 2 | 2 | 0 |
| 6 | 1 | 2 | 2 | 1 |
| 100 | 2 | 2 | 2 | 2 |
| 500 | 2 | 2 | 2 | 2 |
| 1000 | 2 | 1 | 2 | 1 |
| 2000 | 2 | 1 | 1 | 1 |
| 5000 | 2 | 0 | 0 | 0 |

Table 5-6

Table 5-6 Impact of 2-propanol on a non-alcohol beverage containing 5 ppm naringin

| 2-propanol (ppm) | providing alcohol-like savor | reducing medicine-like taste | reducing lingering after taste | comprehensive evaluation |
|---|---|---|---|---|
| 3 | 0 | 2 | 2 | 0 |
| 6 | 1 | 2 | 2 | 1 |
| 100 | 2 | 2 | 2 | 2 |
| 500 | 2 | 2 | 2 | 2 |
| 1000 | 2 | 1 | 2 | 1 |
| 2000 | 2 | 1 | 1 | 1 |
| 5000 | 2 | 0 | 0 | 0 |

Table 5-7

Table 5-7 Impact of 2-propanol on a non-alcohol beverage containing 6 ppm naringin

| 2-propanol (ppm) | providing alcohol-like savor | reducing medicine-like taste | reducing lingering after taste | comprehensive evaluation |
|---|---|---|---|---|
| 3 | 0 | 2 | 2 | 0 |

(continued)

| 2-propanol (ppm) | providing alcohol-like savor | reducing medicine-like taste | reducing lingering after taste | comprehensive evaluation |
|---|---|---|---|---|
| 6 | 1 | 2 | 2 | 1 |
| 100 | 2 | 2 | 2 | 2 |
| 500 | 2 | 2 | 2 | 2 |
| 1000 | 2 | 1 | 2 | 1 |
| 2000 | 2 | 1 | 1 | 1 |
| 5000 | 2 | 0 | 0 | 0 |

Table 5-8

Table 5-8 Impact of 2-propanol on a non-alcohol beverage containing 10 ppm naringin

| 2-propanol (ppm) | providing alcohol-like savor | reducing medicine-like taste | reducing lingering after taste | comprehensive evaluation |
|---|---|---|---|---|
| 3 | 0 | 2 | 2 | 0 |
| 6 | 1 | 2 | 2 | 1 |
| 100 | 2 | 2 | 2 | 2 |
| 500 | 2 | 2 | 2 | 2 |
| 1000 | 2 | 1 | 2 | 1 |
| 2000 | 2 | 1 | 1 | 1 |
| 5000 | 2 | 0 | 0 | 0 |

Table 5-9

Table 5-9 Impact of 2-propanol on a non-alcohol beverage containing 20 ppm naringin

| 2-propanol (ppm) | providing alcohol-like savor | reducing medicine-like taste | reducing lingering after taste | comprehensive evaluation |
|---|---|---|---|---|
| 3 | 0 | 2 | 2 | 0 |
| 6 | 1 | 2 | 2 | 1 |
| 100 | 2 | 2 | 2 | 2 |
| 500 | 2 | 2 | 2 | 2 |
| 1000 | 2 | 1 | 2 | 1 |
| 2000 | 2 | 1 | 1 | 1 |
| 5000 | 2 | 0 | 0 | 0 |

Table 5-10

Table 5-10 Impact of 2-propanol on a non-alcohol beverage containing 30 ppm naringin

| 2-propanol (ppm) | providing alcohol-like savor | reducing medicine-like taste | reducing lingering after taste | comprehensive evaluation |
|---|---|---|---|---|
| 3 | 0 | 2 | 2 | 0 |
| 6 | 1 | 2 | 2 | 1 |
| 100 | 2 | 2 | 2 | 2 |

(continued)

| 2-propanol (ppm) | providing alcohol-like savor | reducing medicine-like taste | reducing lingering after taste | comprehensive evaluation |
|---|---|---|---|---|
| 500 | 2 | 2 | 2 | 2 |
| 1000 | 2 | 1 | 2 | 2 |
| 2000 | 2 | 1 | 1 | 1 |
| 5000 | 2 | 0 | 0 | 0 |

Table 5-11

Table 5-11 Impact of 2-propanol on a non-alcohol beverage containing 40 ppm naringin

| 2-propanol (ppm) | providing alcohol-like savor | reducing medicine-like taste | reducing lingering after taste | comprehensive evaluation |
|---|---|---|---|---|
| 3 | 0 | 2 | 1 | 0 |
| 6 | 1 | 2 | 1 | 1 |
| 100 | 2 | 2 | 1 | 1 |
| 500 | 2 | 2 | 2 | 2 |
| 1000 | 2 | 1 | 2 | 2 |
| 2000 | 2 | 1 | 1 | 1 |
| 5000 | 2 | 0 | 0 | 0 |

Table 5-12

Table 5-12 Impact of 2-propanol on a non-alcohol beverage containing 50 ppm naringin

| 2-propanol (ppm) | providing alcohol-like savor | reducing medicine-like taste | reducing lingering after taste | comprehensive evaluation |
|---|---|---|---|---|
| 3 | 0 | 2 | 1 | 0 |
| 6 | 1 | 2 | 1 | 1 |
| 100 | 2 | 2 | 1 | 1 |
| 500 | 2 | 2 | 2 | 2 |
| 1000 | 2 | 1 | 2 | 2 |
| 2000 | 2 | 1 | 1 | 1 |
| 5000 | 2 | 0 | 0 | 0 |

Table 5-13

Table 5-13. Impact of 2-propanol on a non-alcohol beverage containing 100 ppm naringin

| 2-propanol (ppm) | providing alcohol-like savor | reducing medicine-like taste | reducing lingering after taste | comprehensive evaluation |
|---|---|---|---|---|
| 3 | 0 | 2 | 1 | 0 |
| 6 | 1 | 2 | 1 | 1 |
| 100 | 2 | 2 | 1 | 1 |
| 500 | 2 | 2 | 1 | 1 |
| 1000 | 2 | 1 | 1 | 1 |

(continued)

| 2-propanol (ppm) | providing alcohol-like savor | reducing medicine-like taste | reducing lingering after taste | comprehensive evaluation |
|---|---|---|---|---|
| 2000 | 2 | 1 | 1 | 1 |
| 5000 | 2 | 0 | 0 | 0 |

Table 6

Table 6. Result of comprehensive evaluation in the naringin-containing beverage of Test Example 2 (diagram)

| 2-propanol concentration (ppm) | 0.05 | 0.1 | 0.5 | 1 | 3 | 5 | 6 | 10 | 20 | 30 | 40 | 50 | 100 |
|---|---|---|---|---|---|---|---|---|---|---|---|---|---|
| 3 | | | | | | | | | | | | | |
| 6 | | | | | | | | | | | | | |
| 100 | | | | | | | | | | | | | |
| 500 | | | | | | | | | | | | | |
| 1000 | | | | | | | | | | | | | |
| 2000 | | | | | | | | | | | | | |
| 5000 | | | | | | | | | | | | | |

Test Example 4. Impact of 2-propanol on a non-alcohol beverage containing a bitterness substance

A study was conducted on the impact of adding 2-propanol to a non-alcohol beverage containing quassin as a bitterness substance. The non-alcohol beverage was prepared similarly to Test Example 2, except for usmg 2-propanol instead of 1-propanol, to perform the evaluation The result is shown in the tables below

As evident from the tables, an incorporation of 6 to 2000 ppm ot 2-propanol in the non-alcohol beverage based on the present invention resulted in a reduction of a medicine-like taste and a lingering after taste, while providing an alcohol -like savor.

As shown in Tables 7, 8, the result when quassin is added likewise as the bitterness substance was particularly preferable with a great reduction in deficiencies, such as the medicine-like taste and the lingering after taste, while the alcohol-like savor remained evident, when the 2-propanol concentration in the beverage was 6 to 2000 ppm and the quassin concentration was 0.05 to 3 ppm. Further, the combination of a 2-propanol concentration in the beverage of 100 to 500 ppm and a quassin concentration of 0.05 to 3 ppm exhibited a more preferable result, showing the above tendency more strongly.

Table 7-1

Table 7-1. Impact of 2-propanol on a non-alcohol beverage containing 0.05 ppm quassin

| 2-propanol (ppm) | providing alcohol-like savor | reducing medicine-like taste | reducing lingering after taste | comprehensive evaluation |
|---|---|---|---|---|
| 3 | 0 | 2 | 2 | 0 |
| 6 | 1 | 2 | 2 | 1 |
| 100 | 2 | 2 | 2 | 2 |
| 500 | 2 | 2 | 2 | 2 |
| 1000 | 2 | 1 | 1 | 1 |
| 2000 | 2 | 1 | 1 | 1 |
| 5000 | 2 | 0 | 0 | 0 |

Table 7-2

Table 7-2. Impact of 2-propanol on a non-alcohol beverage containing 0.1 ppm quassin

| 2-propanol (ppm) | providing alcohol-like savor | reducing medicine-like taste | reducing lingering after taste | comprehensive evaluation |
|---|---|---|---|---|
| 3 | 0 | 2 | 2 | 0 |
| 6 | 1 | 2 | 2 | 1 |
| 100 | 2 | 2 | 2 | 2 |
| 500 | 2 | 2 | 2 | 2 |
| 1000 | 2 | 1 | 1 | 1 |
| 2000 | 2 | 1 | 1 | 1 |
| 5000 | 2 | 0 | 0 | 0 |

Table 7-3

Table 7-3 Impact of 2-propanol on a non-alcohol beverage containing 0 5 ppm quassin

| 2-propanol (ppm) | providing alcohol-like savor | reducing medicine-like taste | reducing lingering after taste | comprehensive evaluation |
|---|---|---|---|---|
| 3 | 0 | 2 | 2 | 0 |
| 6 | 1 | 2 | 2 | 1 |
| 100 | 2 | 2 | 2 | 2 |
| 500 | 2 | 2 | 2 | 2 |
| 1000 | 2 | 1 | 2 | 1 |
| 2000 | 2 | 1 | 1 | 1 |
| 5000 | 2 | 0 | 0 | 0 |

Table 7-4

Table 7-4. Impact of 2-propanol on a non-alcohol beverage containing 1 ppm quassin

| 2-propanol (ppm) | providing alcohol-like savor | reducing medicine-like taste | reducing lingering after taste | comprehensive evaluation |
|---|---|---|---|---|
| 3 | 0 | 2 | 1 | 0 |
| 6 | 1 | 2 | 1 | 1 |
| 100 | 2 | 2 | 2 | 2 |
| 500 | 2 | 2 | 2 | 2 |
| 1000 | 2 | 1 | 2 | 1 |
| 2000 | 2 | 1 | 1 | 1 |
| 5000 | 2 | 0 | 0 | 0 |

Table 7-5

Table 7-5 Impact of 2-propanol on a non-alcohol beverage containing 3 ppm quassin

| 2-propanol (ppm) | providing alcohol-like savor | reducing medicine-like taste | reducing lingering after taste | comprehensive evaluation |
|---|---|---|---|---|
| 3 | 0 | 2 | 0 | 0 |
| 6 | 1 | 2 | 1 | 1 |

(continued)

| 2-propanol (ppm) | providing alcohol-like savor | reducing medicine-like taste | reducing lingering after taste | comprehensive evaluation |
|---|---|---|---|---|
| 100 | 2 | 2 | 1 | 2 |
| 500 | 2 | 2 | 2 | 2 |
| 1000 | 2 | 1 | 2 | 1 |
| 2000 | 2 | 1 | 1 | 1 |
| 5000 | 2 | 0 | 0 | 0 |

Table 8

Table 8. Result of comprehensive evaluation in the naringin-containing beverage of Test Example 2

| 2-propanol concentration (ppm) | 0.05 | 0.1 | 0.5 | 1 | 3 |
|---|---|---|---|---|---|
| 3 | | | | | |
| 6 | | | | | |
| 100 | | | | | |
| 500 | | | | | |
| 1000 | | | | | |
| 2000 | | | | | |
| 5000 | | | | | |

**Claims**

1. A beverage containing a bitterness substance and having less than 1% alcohol by volume, wherein a propanol concentration in the beverage is 6 to 2000 ppm.

2. The beverage according to Claim 1, wherein propanol is 1-propanol and/or 2-propanol.

3. The beverage according to either Claim 1 or 2, wherein the bitterness substance is naringin and/or quassin.

4. The beverage according to Claim 2, wherein a naringin concentration in the beverage is 0.05 to 30 ppm.

5. The beverage according to Claim 2, wherein a quassin concentration in the beverage is 0.05 to 3 ppm.

6. The beverage according to any one of Claims 1 to 5, wherein the amount of alcohol by volume is less than 0.01%.

7. The beverage according to any one of Claims 1 to 6 containing a high-intensity sweetener.

8. The beverage according to any one of Claims 1 to 7, wherein the high-intensity sweetener is one type or two or more types selected from a group consisting of sucralose, Acesulfame K, and aspartame.

9. The beverage according to any one of Claims 1 to 8 containing a carbonic acid gas.

10. The beverage according to any one of Claims 1 to 9, wherein a soluble solid concentration in the beverage is 0.1 to 5.0 degrees.

11. A method for producing a beverage containing a bitterness substance and having less than 1% alcohol by volume, comprising adjusting a propanol concentration in the beverage to 6 to 2000 ppm.

12. A method for improving a taste of a beverage containing a bitterness substance and having less than 1% alcohol by volume, comprising adjusting a propanol concentration in the beverage to 6 to 2000 ppm.

**Europäisches Patentamt**
**European Patent Office**
**Office européen des brevets**

## EUROPEAN SEARCH REPORT

Application Number

EP 13 19 4828

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 1 187 164 A (NAT RES DEV [GB]) 8 April 1970 (1970-04-08) * claims 1-5; example 1; table 1 * ----- | 1-12 | INV. A23L2/56 C12G3/06 C12C12/04 C12G3/02 |
| X | JP 2012 060980 A (KIRIN BREWERY) 29 March 2012 (2012-03-29) * abstract * ----- | 1-12 | |
| X | JP 2012 016308 A (KIRIN BREWERY) 26 January 2012 (2012-01-26) * abstract * ----- | 1-12 | |
| X,D | JP 2012 060975 A (KIRIN BREWERY) 29 March 2012 (2012-03-29) * abstract * ----- | 1-12 | |
| A | US 4 405 652 A (BOUCHER ARMAND R [US]) 20 September 1983 (1983-09-20) * claim 1; examples 1,2 * ----- | 1-12 | |
| A,D | JP 2011 254731 A (KIRIN BREWERY) 22 December 2011 (2011-12-22) * abstract * ----- | 1-12 | TECHNICAL FIELDS SEARCHED (IPC) A23L C12G C12C |

The present search report has been drawn up for all claims

| Place of search | Date of completion of the search | Examiner |
|---|---|---|
| The Hague | 24 March 2014 | Tallgren, Antti |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**                     EP 13 19 4828

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2014

| Patent document cited in search report | | Publication date | Patent family member(s) | | Publication date |
|---|---|---|---|---|---|
| GB 1187164 | A | 08-04-1970 | ES | 365266 A1 | 16-02-1971 |
| | | | GB | 1187164 A | 08-04-1970 |
| JP 2012060980 | A | 29-03-2012 | JP | 5161943 B2 | 13-03-2013 |
| | | | JP | 2012060980 A | 29-03-2012 |
| JP 2012016308 | A | 26-01-2012 | NONE | | |
| JP 2012060975 | A | 29-03-2012 | NONE | | |
| US 4405652 | A | 20-09-1983 | AR | 241935 A1 | 29-01-1993 |
| | | | AU | 555176 B2 | 18-09-1986 |
| | | | AU | 8533782 A | 28-07-1983 |
| | | | BE | 893991 A2 | 16-11-1982 |
| | | | BR | 8300175 A | 11-10-1983 |
| | | | CA | 1183483 A1 | 05-03-1985 |
| | | | DE | 3241187 A1 | 28-07-1983 |
| | | | ES | 8400486 A1 | 16-01-1984 |
| | | | FR | 2520005 A1 | 22-07-1983 |
| | | | GB | 2113712 A | 10-08-1983 |
| | | | GB | 2141735 A | 03-01-1985 |
| | | | IT | 1156477 B | 04-02-1987 |
| | | | JP | H0436673 B2 | 16-06-1992 |
| | | | JP | S58129969 A | 03-08-1983 |
| | | | LU | 84332 A1 | 28-02-1983 |
| | | | NL | 8203029 A | 16-08-1983 |
| | | | NZ | 200459 A | 30-08-1988 |
| | | | PT | 75163 A | 01-07-1982 |
| | | | SE | 459098 B | 05-06-1989 |
| | | | US | 4405652 A | 20-09-1983 |
| JP 2011254731 | A | 22-12-2011 | NONE | | |

EPO FORM P0459

For more details about this annex : see Official Journal of the European Patent Office, No. 12/82

**EP 2 737 810 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011254731 A
- JP 2012060975 A